# EUROPÄISCHE PATENTSCHRIFT

(11) **EP 0 373 315 B1**
(45) Veröffentlichungstag und Bekanntmachung des Hinweises auf die Patenterteilung: **14.04.1993**
(21) Anmeldenummer: 89118846.8
(22) Anmeldetag: 11.10.1989
(51) Int. Cl.: B60T 13/58, B60T 13/66, B60T 15/14

(54) **Anordnung zur Steuerung eines elektrisch gesteuerten Bremskreises einer in einem Fahrzeug angeordneten Mehrkreis-Bremsanlage mit druckmittelbetätigten Bremsen**
Arrangement for the control of an electrically controlled brake circut of a multi-circuit brake system in a vehicle with pressure-actuated brakes
Aménagement pour le réglage d'un circuit de freinage à commande électrique dans un système de freinage multicircuit d'un véhicule comportant des freins actionnés en pression

(30) Priorität: 12.12.1988 DE 3841749
(43) Veröffentlichungstag der Anmeldung: 20.06.1990
(73) Patentinhaber: WABCO GmbH, 30453 Hannover (DE)
(72) Erfinder: Feldmann, Joachim, D-3057 Neustadt 2 (DE); Schult, Manfred, Dr., D-3008 Garbsen 8 (DE); Warendorf, Gerhard, D-3002 Wedemark 2 (DE)
(74) Vertreter: Schrödter, Manfred, Dipl.-Ing.

(56) Entgegenhaltungen:
- EP-A- 0 062 246
- EP-A- 0 070 407
- EP-A- 0 145 001
- EP-A- 0 146 769
- EP-A- 0 190 411
- EP-A- 0 241 673
- EP-A- 0 267 881
- DE-A- 3 603 143
- FR-A- 2 566 729
- GB-A- 2 151 731
- US-A- 3 350 142

## Beschreibung

### Beschreibung

Die Erfindung betrifft eine Anordnung zur Steuerung wenigstens eines elektrisch gesteuerten Bremskreises einer Mehrkreis-Bremsanlage gemäß dem Oberbegriff des Patentanspruchs 1.

Eine derartige Anordnung ist aus Fig.2 der EP-B-0 088 911 bekannt. Bei diesem Stand der Technik ist jeder Bremskreis sowohl elektrisch als auch durch den vom Bremswertgeber ausgesteuerten Druck steuerbar. Zu diesem Zweck weist dieser Stand der Technik in jedem Bremskreis einen sowohl elektrisch als auch durch den ausgesteuerten Druck betätigbaren Bremsdruckmodulator (dort Relaisventile 30, 31, 37, 38) auf. Da ein derartiger Bremsdruckmodulator wegen seiner Kompliziertheit ein aufwendiges Gerät ist, ist auch die bekannte Lösung aufwendig, dies um so mehr als sie die Installation von wenigstens zwei Bremsdruckmodulatoren voraussetzt.

Aus der US-A-3 350 142 ist eine Bremsanlage mit druckmittelbetätigten Bremsen für einen Fahrzeugzug aus einem Zugwagen und einem Anhänger bekannt. Der Bremswertgeber und der durch den ausgesteuerten Druck betätigte Bremskreis befinden sich im Zugwagen. Der elektrisch gesteuerte Bremskreis befindet sich in dem Anhänger. Der von dem Bremswertgeber ausgesteuerte Druck wird im Zugwagen von einem Drucksensor erfaßt und in ein elektrisches Signal in Form eines Widerstandswertes umgesetzt. Der elektrisch gesteuerte Bremskreis in dem Anhänger weist einen elektrisch betätigten Bremsdruckmodulator auf, der einen von der Stärke des zugeführten elektrischen Stroms abhängigen Bremsdruck aussteuert. Die Stärke des zugeführten elektrischen Stroms wird durch den von dem Drucksensor eingestellten Widerstandswert bestimmt.

Der Erfindung liegt die Aufgabe zugrunde, eine Anordnung der eingangs genannten Art mit einfachen Mitteln derart zu verbessern, daß sie mit verringertem Aufwand durchführbar ist.

Diese Aufgabe wird durch die im Patentanspruch 1 angegebene Erfindung gelöst. Vorteilhafte Fortbildungen und Ausgestaltungen der Erfindung sind in den Unteransprüchen angegeben.

Die Erfindung kann in Verbindung mit jedem geeigneten Druckmittel realisiert werden.

Die o. e. Anordnung nach der EP-B-0 088 911 setzt zwingend einen Bremswertgeber voraus, der sowohl einen Druck als auch ein elektrisches Betätigungssignal aussteuert. Solche Kombinations-Bremswertgeber sind aufwendig. Die Erfindung ermöglicht hingegen an einen einfachen, nur Druck aussteuernden Bremswertgeber einen einfachen Drucksensor anzubauen, und ermöglicht damit auch insoweit grundsätzlich eine Aufwandsverringerung.

Die Erfindung vermeidet den Nachteil, daß, wenn eine Mehrkreis-Bremsanlage aus wenigstens einem elektrisch gesteuerten Bremskreis und wenigstens einem durch den vom Bremswertgeber ausgesteuerten Druck betätigten Bremskreis besteht, der elektrisch gesteuerte Bremskreis in seinem Bremsdruckaufbau dem durch den Druck betätigten Bremskreis voreilt, was beispielsweise ungleichmäßigen Bremsverschleiß zur Folge haben kann. In einem derartigen Fall besorgt die Erfindung, daß der Bremsdruckaufbau in dem elektrisch gesteuerten Kreis nicht schneller als in dem durch das Drucksignal gesteuerten Bremskreis stattfindet und daß die Entstehung von dadurch bedingten Nachteilen vermieden wird.

Die Erfindung bietet den Vorteil, daß der von dem Bremswertgeber ausgesteuerte Druck den Bremsen des durch diesen Druck betätigten Bremskreises direkt als Bremsdruck zugeführt werden kann. Dadurch besteht die Möglichkeit einer sehr einfachen und wenig aufwendigen Ausbildung dieses Bremskreises. Ist jedoch aufgrund von der Erfindung unabhängiger Gesichtspunkte, beispielsweise zur Verkürzung der Ansprechzeit, eine Maßnahme in diesem Bremskreis erforderlich, so bietet die Erfindung auch für diesen Fall eine wenig aufwendige Lösung, indem sie den Einsatz eines herkömmlichen Relaisventils anstelle eines oder mehrerer Druckmodulatoren gestattet.

In weiterer Ausgestaltung, die eine bauliche Vereinfachung und/oder eine kostengünstige Lösung der Mehrkreis-Bremsanlage gestattet, kann der Drucksensor im Gehäuse des Bremswertgebers angeordnet sein. Der Drucksensor läßt sich auch mit einem Kraftsensor oder einem Wegsensor darstellen.

Ist der Drucksensor im Gehäuse des Bremswertgebers angeordnet, sind Fortbildungen des letzteren möglich, die bei Ausfall des durch den ausgesteuerten Druck betätigten Bremskreises eine direkte Umsetzung der dem Bremswertgeber zugeführten Betätigungskraft und/oder dessen Betätigungswegs in ein elektrisches Signal des Drucksensors ermöglichen.

Weitere Vorteile der Erfindung werden bei deren nun folgender Erläuterung anhand von in Zeichnungen dargestellten Ausführungsbeispielen genannt.

Unter durchgehender Verwendung durchgezogener Linien für Druckmittelleitungen und strichpunktierter Linien für elektrische Verbindungen sowie gleicher Bezugszeichen für Bauteile mit gleichen Funktionen zeigen:
- **Fig.1**: schematisch eine MehrkreisBremsanlage,
- **Fig.2**: einen Bremswertgeber mit im gleichen Gehäuse angeordnetem Drucksensor,
- **Fig.3 Fig. 4**: Einzelheiten des Drucksensors gemäß Fig.2,
- **Fig.5 Fig.6**: weitere Ausgestaltungen des Bremswertgebers mit im gleichen Gehäuse angeordnetem Drucksensor

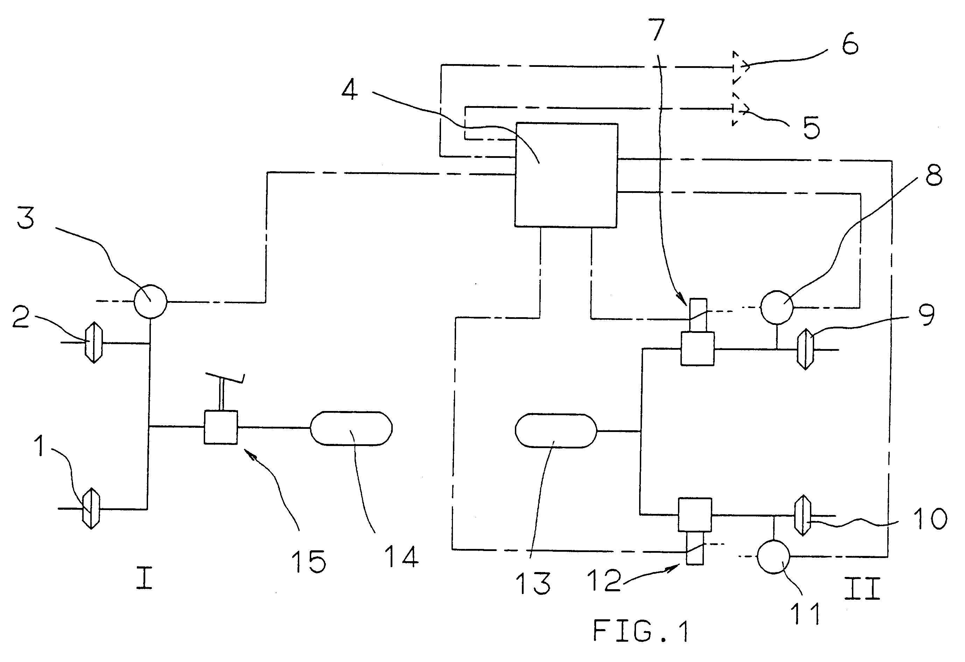

Die in Fig.1 dargestellte Mehrkreis-Bremsanlage enthält einen durch Druck betätigten Bremskreis und einen elektrisch gesteuerten Bremskreis, die generell mit (I) bzw. (II) bezeichnet sind.

Die Mehrkreis-Bremsanlage weist einen Bremswertgeber (15) auf, der einen von der zugeführten Betätigungskraft und/oder den Betätigungsweg abhängigen Druck aussteuert. Derartige Bremswertgeber sind bekannt, z.B. aus der WABCO Westinghouse Druckschrift 461 106, Ausgabe August 1973.

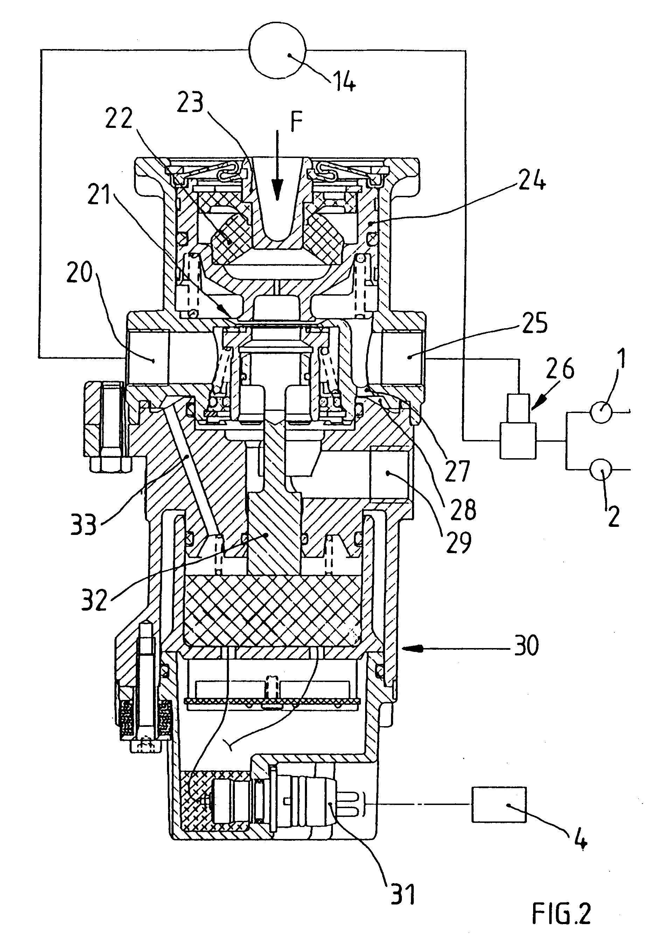

Der durch den ausgesteuerten Druck des Bremswertgebers (15) betätigte Bremskreis (I) besteht aus einem Druckmittelvorrat (14), dem Bremswertgeber (15) und druckmittelbetätigten Bremsen (1, 2). Der von dem Bremswertgeber (15) ausgesteuerte Druck wird den Bremsen (1, 2) direkt als Bremsdruck zugeführt. Er kann aber auch, wie im Ausführungsbeispiel nach Fig.2 angedeutet, zur Steuerung des Bremsdrucks über ein Relaisventil verwendet werden. Auch ist die Anordnung weiterer üblicher Geräte (z.B. Bremskraftregler, Schnellöseventil usw.) in dem Bremskreis (I) möglich. Zur Vereinfachung wird dieser Bremskreis im folgenden als druckgesteuerter Bremskreis (I) bezeichnet.

Der elektrisch gesteuerte Kreis (II) besteht aus einem Druckmittelvorrat (13), druckmittelbetätigten Bremsen (9, 10), einem am druckgesteuerten Bremskreis (I) angeordneten Drucksensor (3) und einer elektrischen Bremsdruck-Steuereinrichtung (4, 7, 12, 8, 11).

Die Versorgung der Druckmittelvorräte (13 und 14) erfolgt in bekannter Weise über eine nicht dargestellte Druckbeschaffungsanlage.

Der Drucksensor (3) ist derart ausgebildet, daß er den vom Bremswertgeber (15) ausgesteuerten (und den Bremsen 1, 2 als Bremsdruck zugeführten) Druck mißt und diesen in ein elektrisches Signal umsetzt, worauf weiter unten ausführlich eingegangen wird.

Die Bremsdruck-Steuereinrichtung (4, 7, 12, 8, 11) besteht aus einer Steuerelektronik (4), die eingangsseitig mit dem Ausgang des Drucksensors (3) verbunden ist, elektrisch gesteuerten Druckmodulatoren (7, 12) und Bremsdrucksensoren (8, 11). Die Druckmodulatoren (7, 12) sind der Steuerelektronik (4) elektrisch nachgeschaltet und kontrollieren jeweils die Verbindung einer der Bremsen (9, 10) mit dem Druckmittelvorrat (13). Die Bremsdrucksensoren (8, 11) messen den die jeweils zugeordnete Bremse (9, 10) beaufschlagenden Bremsdruck und geben ein entsprechendes elektrisches Signal an die Steuerelektronik (4) ab. Die als getrennte Bauelemente dargestellten Bremsdrucksensoren (8, 11) können durch in den jeweils zugeordneten Druckmodulator (7 bzw. 12) integriert sein.

In der bisher beschriebenen Grundausführung funktioniert das Ausführungsbeispiel wie folgt.

Bei einer Betätigung des Bremswertgebers (15) werden die Bremsen (1, 2) mit einem von der dem Bremswertgeber (15) zugeführten Betätigungskraft und/oder dem Betätigungsweg abhängigen Bremsdruck aus dem Druckmittelvorrat (14) beaufschlagt. Der Druckgeber (3) mißt diesen Bremsdruck und setzt ihn in ein elektrisches Signal um, Welches der Bremsdruck-Steuereinrichtung (4, 7, 12, 8, 11), genauer: der Steuerelektronik (4), als Steuersignal zugeführt wird.

Die Steuerelektronik (4) gibt bei Erhalt dieses Steuersignals zu den Druckmodulatoren (7, 12) ein oder für jeden Druckmodulator (7 bzw. 12) ein eigenes davon abhängiges Signal ab; die Druckmodulatoren (7, 12) lassen daraufhin bis zum Abfall dieses Signals Druck aus dem Druckmittelvorrat (13) als Bremsdruck zu den Bremsen (9, 10) durch. Der erwähnte Abfall des Signals tritt ein, wenn die Steuerelektronik (4) Gleichheit zwischen den Signalen der Druckgeber (8, 11) und dem ihr als Steuersignal zugeführten Signal der Drucksensors (3) feststellt. Die Bremsdruck-Steuereinrichtung (4, 7, 12, 8, 11) bildet also einen Regelkreis für die Bremsdrücke der Bremsen (9, 10).

Aus diesen Ausführungen geht hervor, daß die beschriebenen Funktionen im elektrisch gesteuerten Bremskreis (II) durch das Signal des Druckgebers (3) ausgelöst werden und von diesem abhängig sind. In dem Ausführungsbeispiel wird also ein Verfahren realisiert, bei dem der vom Bremswertgeber (15) ausgesteuerte Druck in ein von seiner Höhe abhängiges elektrisches Signal umgesetzt wird und der elektrisch gesteuerte Bremskreis (II) von dem elektrischen Signal wenigstens mitgesteuert wird. Auf den Gesichtspunkt der "Mitsteuerung" wird weiter unten näher eingegangen. Das Ausführungsbeispiel stellt deshalb eine Mehrkreis-Bremsanlage dar, in der zur Steuerung des elektrisch gesteuerten Bremskreises (II) in Form des Drucksensors (3) nur ein geringer Aufwand erforderlich ist.

Aus der Funktionsbeschreibung geht auch hervor, daß der elektrisch gesteuerte Bremskreis (II) dem druckgesteuerten Bremskreis (I) folgt. Der aufgrund seiner elektrischen Steuerung potentiell schnellere Bremskreis (II) wird dadurch zwar verlangsamt, dies geschieht jedoch vorteilhaft (siehe weiter vorn) zugunsten einer Anpassung an den Bremskreis (I).

Über die bisher beschriebene Grundausführung hinaus kann das Ausführungsbeispiel auf vielfältige Arten, von denen einige in Fig.1 gestrichelt angedeutet sind, fortgebildet werden.

Mit (5 bzw. 6) sind beispielhaft Sensoren bezeichnet, die bestimmte Fahrzeugparameter erfassen und in elektrische Signale umsetzen. Diese Sensoren sind mit Eingängen der Steuerelektronik (4) elektrisch verbunden. Die Steuerelektronik (4) ist in diesem Fall derart ausgebildet, daß sie aus dem von dem Drucksensor (3) zugeführten Steuersignal und den Signalen der Sensoren (5, 6) ein korrigiertes Signal bzw. korrigierte Signale für die Druckmodulatoren (7, 12) bildet und dieses bzw. diese abschaltet, wenn sie Gleichheit zwischen den Signalen der Drucksensoren (8, 11) und dem bzw. den korrigierten Signal(en) feststellt. Der den Bremsen (9, 10) zugeführte Bremsdruck hängt in diesem Fall also nicht nur von dem von dem Druckgeber (3) stammenden Steuersignal, sondern auch von den durch die Sensoren (5, 6) erfaßten Fahrzeugparametern ab. Mit anderen Worten: In dieser Ausgestaltung wird der elektrisch gesteuerte Bremskreis (II) von dem Signal des Drucksensors (3) "nur" mitgesteuert. In diesem Zusammenhang kommt als Parameter jede für das Fahrzeugverhalten beim Bremsen relevante Fahrzeugeigenschaft in betracht. Beispielhaft genannt seien der Beladungszustand des Fahrzeugs und/oder der Beladungszustand der dem elektrisch gesteuerten Bremskreis (II) zugeordneten Achse(n), die Fahrgeschwindigkeit, die Kraft in der Kupplung zwischen Zugfahrzeug und Anhänger, usw.

In Fig.2 ist ein Bremswertgeber dargestellt, in dessen Gehäuse auch der hier mit (30) bezeichnete Drucksensor angeordnet ist.

Der im Oberteil der Zeichnung dargestellte Bremswertgeber entspricht wieder demjenigen der bereits erwähnten WABCO Westinghouse Druckschrift 461 106. Die dem Bremswertgeber über ein Druckstück (23) zugeführte Betätigungskraft (F) beaufschlagt über eine Regelfeder (22) einen Betätigungskolben (24), der in entgegengesetzter Richtung von dem in einer nicht bezeichneten Kammer und an einem Ausgang (25) anstehenden ausgesteuerten Druck beaufschlagt ist. Der Betätigungskolben (24) betätigt ein kombiniertes Ein- und Auslaßventil (21), durch welches die erwähnte Kammer und der Auslaß (25) über einen Einlaß (20) mit dem Druckmittelvorrat (14) oder über einen Auslaß (29) mit einem Druckentlastungsraum verbindbar sind. Dient als Druckmittel Luft, so ist der Druckentlastungsraum üblicherweise die Atmosphäre.

Der Drucksensor (30) ist unterhalb des Bremswertgebers angeordnet. Er wird über einen Gehäusekanal (27, 28, 33) mit dem ausgesteuerten Druck beaufschlagt und gibt das diesem entsprechende elektrische Signal über einen Anschlußstecker (31) ab.

Das Ausführungsbeispiel deutet noch an, daß, anders als beim Ausführungsbeispiel nach Fig.1, der ausgesteuerte Druck den Bremsen (1, 2) nicht direkt als Bremsdruck, sondern einem Relaisventil (26) als Steuerdruck zugeführt wird, wobei das Relaisventil (26) in bekannter Weise die Aussteuerung des Bremsdrucks aus dem Druckmittelvorrat (14) übernimmt.

Über die soeben beschriebene Grundausführung hinaus ist das Ausführungsbeispiel derart fortgebildet, daß es auch bei Ausfall des druckgesteuerten Bremskreises (I) eine Betätigung des elektrisch gesteuerten Bremskreises (II) sicherstellt. Dieser Fall ist dadurch gekennzeichnet, daß sich am Betätigungskolben (24) und damit am Auslaß (25) ein ausgesteuerter Druck, der ausreichend hoch ist, den Betätigungskolben (24) ins Gleichgewicht mit der Betätigungskraft (F) zu bringen, nicht aufbauen kann.

Zum Zwecke dieser Fortbildung ist zwischen dem Betätigungskolben (24) und dem Drucksensor (30) ein Stößel (32) angeordnet, dessen Hub in Richtung der Betätigungskraft (F) unter gleichzeitiger Begrenzung des Hubs des Betätigungskolbens (24) in dieser Richtung von dem Drucksensor (30) begrenzt wird. Der Drucksensor (30) ist zum gleichen Zweck außer als Drucksensor auch als Kraftsensor ausgebildet.

Bei intaktem druckgesteuertem Bremskreis (I) läßt der Stößel (32) eine freie Beweglichkeit des Betätigungskolbens (24) gegenüber dem Drucksensor (30) zu. Bei einer Betätigung des Bremswertgebers bei Ausfall des druckgesteuerten Bremskreises (I) wird hingegen der Stößel (32) zwischen dem Betätigungskolben (24) und dem Drucksensor (32) eingespannt, wobei die Betätigungskraft (F) bzw. deren von dem ausgesteuerten Druck (Restdruck) nicht ausgeglichener Teil vom Betätigungskolben (24) auf den Stößel (32) und von diesem auf den Drucksensor (30) übertragen wird.

Je nachdem, ob der Bremsdruckgeber noch einen Restdruck aussteuert oder nicht, wird der Drucksensor (30) von diesem Restdruck und dem von diesem nicht ausgeglichenen Teil der Betätigungskraft (F) oder von der vollen Betätigungskraft (F) beaufschlagt. Das bedeutet, daß der Drucksensor (30) auch bei Ausfall des druckgesteuerten Bremskreises (I) stets ein der vollen Betätigungskraft (F) entsprechendes elektrisches Signal als Steuersignal zu der Steuerelektronik (4) abgibt.

Im Ausführungsbeispiel dringt das dem Betätigungskolben (24) zugewandten Ende des Stößels (32) mit Axialspiel zu einer inneren Schulter des Ventilkörpers des Doppelventils (21) in diesen Ventilkörper ein. Auch andere Detailausgestaltungen sind möglich, beispielsweise könnte die dem Betätigungskolben (24) abgewandte Stirnseite des Ventilkörpers der Stirnseite des Stößels (32) gegenüberstehen. In beiden Fällen nimmt der Ventilkörper bei Ausfall des druckgesteuerten Bremskreises (I) am Kraftfluß zwischen dem Betätigungskolben (24) und dem Stößel (32) teil.

Der Stößel kann aber in nicht dargestellter Weise den genannten Ventilkörper auch völlig durchdringen und unter Freistellung des Ventilkörpers von dem Kraftfluß durch den Ventilkörper hindurch direkt mit dem Betätigungskoiben in Eingriff treten oder auch mit diesem einstückig ausgebildet sein.

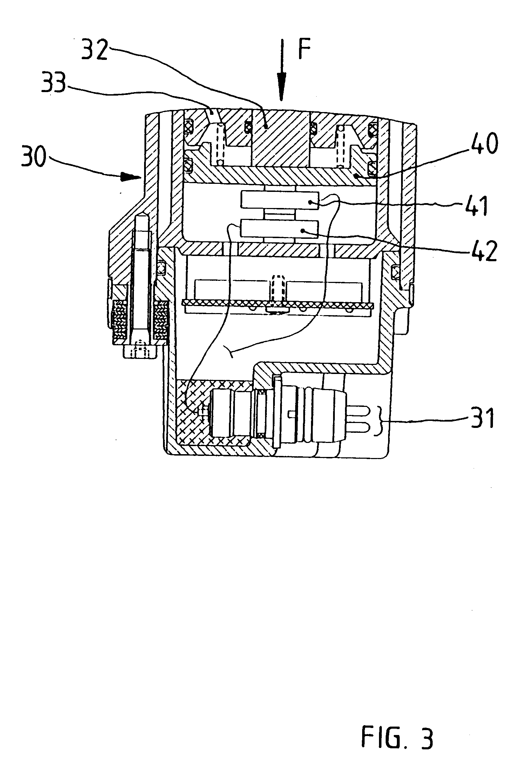

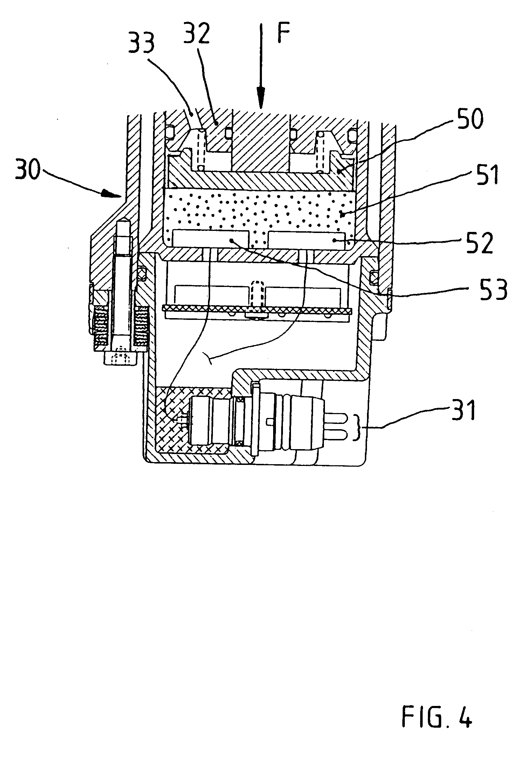

Die Fig.3 und 4 zeigen in Ausschnitten eines Bremswertgebers nach Fig.2 Einzelheiten des dort generell mit (30) bezeichneten Drucksensors.

In Fig.3 besteht der Drucksensor aus einem Kraftsensor (41, 42) und einer in Richtung der Wirkachse der Betätigungskraft (F) abgedichtet verschiebbaren Druckaufnahmeplatte (40). Die Druckaufnahmeplatte (40) ist zwischen dem Kraftsensor (41, 42) und dem diesem zugewandten Ende des Stößels (32) angeordnet.

Bei intaktem druckgesteuertem Bremskreis (I) wird die Druckaufnahmeplatte (40) über den Gehäusekanal (27, 28, 33) mit dem ausgesteuerten Druck beaufschlagt, setzt diesen über ihre entsprechend bemessene Wirkfläche in eine Kraft von der Größe der zugeführten Betätigungskraft (F) um und gibt diese an den Kraftsensor (41, 42) ab, der daraufhin das dem ausgesteuerten Druck bzw. der Betätigungskraft (F) entsprechende elektrische Signal erzeugt.

Bei einer Betätigung des Bremswertgebers bei ausgefallenem druckgesteuem Bremskreis (I) wird die Druckaufnahmeplatte (40) in entsprechender Weise mit dem Restdruck, soweit vorhanden, und dem nicht ausgeglichenen Teil der Betätigungskraft (F) bzw. der vollen Betätigungskraft (F) beaufschlagt und gibt die daraus resultierende Kraft, die wieder der Betätigungskraft (F) entspricht, bzw. nur die Betätigungskraft (F) an den Kraftsensor (41, 42) weiter.

Bei der in Fig.4 dargestellten Ausgestaltung des Drucksensors (30) ist ein Druckaufnehmer (52, 53) in Richtung auf den Stößel (32) zu in eine Masse (51) aus quasihydraulischem Werkstoff eingebettet. "Quasihydraulisch" ist ein fester Werkstoff, in dem sich Druck wie in einer Flüssigkeit fortpflanzt bzw. verteilt. Bevorzugte derartige Werkstoffe sind Elastomere. Zwischen dem der Masse (51) zugewandten Ende des Stößels (32) und der Masse (51) ist eine in Richtung der Wirkachse der Betätigungskraft (F) verschiebbare Kraftverteilerplatte (50) angeordnet.

Die Kraftverteilerplatte (50) ist gegenüber dem Gehäuse nicht abgedichtet. Der bei einer Betätigung des Bremswertgebers ausgesteuerte Druck bzw. Restdruck kann deshalb die Masse (51) und damit den Druckaufnehmer (52, 53) direkt beaufschlagen. Bei einem Ausfall des druckgesteuerten Bremskreises (I) wird nur die Betätigungskraft (F) bzw. deren von dem Restdruck nicht ausgeglichener Teil über die der Masse (51) zugewandte Fläche der Druckverteilerplatte (50) auf die Masse (51) übertragen und in dieser in Druck bzw. (wenn noch ein Restdruck bestehen in zusätzlichen Druck umgesetzt.

Den durch die Masse (51) auf ihn übertragenen Druck setzt der Druckaufnehmer (52, 53) in das elektrische Signal um.

Mit gleicher Wirkung kann der Druckaufnehmer (52, 53) auch auf jede andere Weise in den quasihydraulischen Werkstoff eingebettet sein.

Diese Ausgestaltung hat gegenüber der Ausgestaltung nach Fig.3 den Vorteil, daß das elektrische Signal nur mit den toleranzbedingten Ungenauigkeiten des Druckaufnehmers (52, 53) behaftet sein kann, während bei jenem Ausführungsbeispiel außer den Ungenauigkeiten des Kraftsensors (41, 42) zusätzliche Ungenauigkeiten aufgrund der Fertigungstoleranzen der Druckaufnahmeplatte (40) und/oder des zugeordneten Gehäusebereichs und aufgrund der Abdichtung (z.B. durch Reibung der Dichtelemente) der Druckaufnahmeplatte (40) auftreten können.

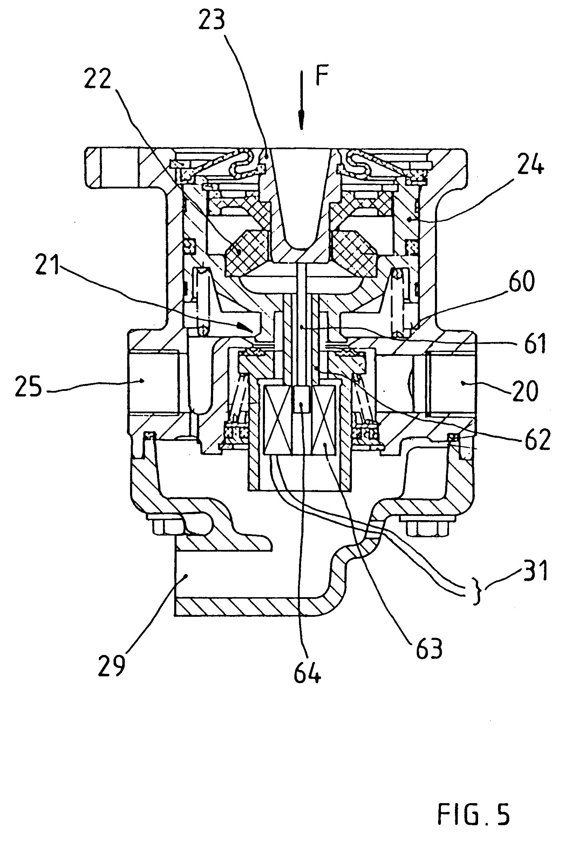

In Fig.5 ist eine andere Ausgestaltung eines Bremswertgebers mit in dessen Gehäuse angeordnetem Drucksensor dargestellt.

Der Bremswertgeber selbst entspricht demjenigen der früheren Ausführungsbeispiele. Vorliegend spielt jedoch die Regelfeder (22) eine besondere Rolle. Die zwischen dem Druckstück (23) und dem Betätigungskolben (24) angeordnete Regelfeder hat bei unbetätigtem Bremswertgeber, wie dargestellt, die Einbauhöhe (s). Bei Betätigung des Bremswertgebers wird die Regelfeder (22) einerseits, über das Druckstück (23), mit der Betätigungskraft (F) und andererseits, über den Betätigungskolben (24), mit der entsprechenden Kraft des ausgesteuerten Drucks beaufschlagt. Dabei verringert sich die Einbauhöhe der Regelfeder (22) um eine von diesen Kräften abhängige Einfederung. Zugleich nähern sich das Druckstück (23) und der Betätigungskolben (24) um das Maß dieser Einfederung einander an.

In diesem Fall ist der mit (63, 64) bezeichnete Drucksensor als Wegsensor ausgebildet, der die Einfederung der Feder (22) als Maß für den ausgesteuerten Druck erfaßt. Der als Drucksensor (63, 64) dienende Wegsensor besteht in bekannter Weise aus einem Stator (63) und einen Tauchanker (64) und gibt als Wegsignal bzw. vorliegend als Drucksignal ein der Eindringtiefe des Tauchankers (64) in den Stator (63) entsprechendes Signal ab. Der Stator (63) ist über ein Verbindungsglied (62) mit dem Betätigungskolben (24) verbunden, Während der Tauchanker (64) über ein zweites Verbindungsglied (60) mit dem Druckstück verbunden ist. Der Drucksensor (63, 64) erfaßt die genannte Einfederung also in Form der zugeordneten Annäherung zwischen dem Druckstück (23) und dem Betätigungskolben (24).

Im Ausführungsbeispiel sind das Verbindungsglied (62) als Rohr und das zweite Verbindungsglied (61) als dieses Rohr durchdringende Stange ausgebildet. Der Drucksensor (63, 64) ist im Ausführungsbeispiel innerhalb des Ventilkörpers des Ventils (21) angeordnet. Auch jede andere geeignete Anordnung des Drucksensors, beispielsweise außen am Gehäuse oder zwischen dem Betätigungskolben und dem Druckstück sowie jede andere geeignete Verbindung seiner Bestandteile mit dem Betätigungskolben bzw. mit dem Druckstück sind einsetzbar.

Auch dieses Ausführungsbeispiel ist über die soeben beschriebene Grundausführung hinaus derart fortgebildet, daß es auch bei Ausfall des druckgesteuerten Bremskreises (I) eine Betätigung des elektrisch gesteuerten Bremskreises (II) sicherstellt. Zu diesem Zweck ist am nicht näher bezeichneten Gehäuse ein Anschlag (60) vorgesehen, der den Hub des Betätigungskolbens (24) in Richtung der Betätigungskraft (F) begrenzt. Kann sich am Betätigungskolben (24) und damit am Auslaß (25) infolge des Ausfalls des druckgesteuerten Bremskreißes (I) kein ausgesteuerter Druck bzw. nur ein ausgesteuerter Restdruck aufbauen, so wird der Betätigungskolben (24) gegen den Anschlag (60) geschoben. Die Regelfeder (22) wird dann entgegengesetzt zur Betätigungskraft (F) außer durch den Restdruck durch die Widerlagerkraft des Anschlags (60) beaufschlagt. Ihre Einfederung und damit das von dem Drucksensor (63, 64) abgegebene elektrische Signal sind bei gegebener Betätigungskraft genauso groß wie bei intaktem druckgesteuerte Bremskreis (I).

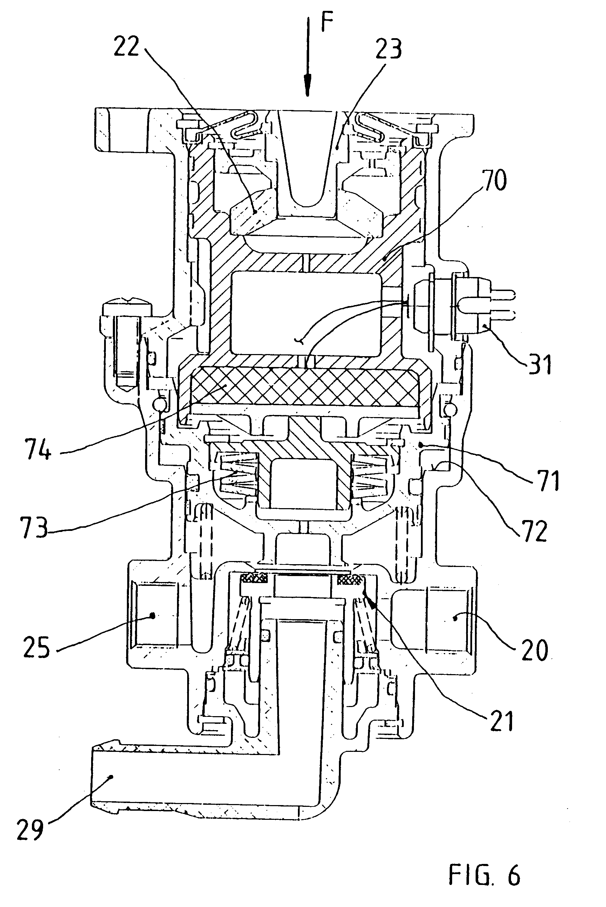

Auch bei dem im Ausführungsbeispiel nach Fig.6 dargestellten Bremswertgeber ist der mit (70, 71, 74) zu bezeichnende Drucksensor im Gehäuse des Bremswertgebers angeordnet. Dieser Bremswertgeber entspricht, wie durch die teilweise Übernahme von Bezugszeichen angedeutet ist, mit den nachstehend beschriebenen Abweichungen den früheren Ausführungsbeispielen.

Der hier mit (70, 71) bezeichnete Betätigungskolben ist in einen mit der Betätigungskraft (F) beaufschlagten Kolbenteil (70) und einen mit dem ausgesteuerten Druck beaufschlagten Kolbenteil (71) aufgeteilt, wobei die Kolbenteile (70 bzw. 71) gegeneinander verschieblich sind. Zwischen den Kolbenteilen (70 und 71) ist ein Kraftsensor (74) angeordnet, über den sich die Kolbenteile (70 und 71) unter der Einwirkung der Betätigungskraft (F) einerseits und des ausgesteuerten Drucks andererseits gegeneinander abstützen. Der Kraftsensor (74) wird dabei mit der dem ausgesteuerten Druck entsprechenden zugeführten Betätigungskraft (F) beaufschlagt und gibt an seinem wieder mit (31) bezeichneten Anschlußstecker das dem ausgesteuerten Druck entsprechende elektrische Signal ab.

Der Drucksensor wird in diesem Falle also von den Kolbenteilen (70, 71) und dem Kraftsensor (74) gebildet.

Auch dieses Ausführungsbeispiel ist über die soeben beschriebene Grundausführung hinaus derart fortgebildet, daß es auch bei Ausfall des druckgesteuerten Bremskreises (I) die Betätigung des elektrisch gesteuerten Bremskreises (II) sicherstellt.

Diesem Zweck dient ein den Hub des Kolbenteils (71) in Richtung der zugeführten Betätigungskraft (F) begrenzender Anschlag (72) am nicht näher bezeichneten Gehäuse. Kann sich am Kolbenteil (71) und damit am Auslaß (25) infolge des Ausfalls des druckgesteuerten Bremskreises (I) kein ausgesteuerter Druck bzw. nur ein ausgesteuerter Restdruck aufbauen, so wird der Drucksensor (70, 71, 74) von der Betätigungskraft (F) bzw. deren nicht ausgeglichenem Teil gegen den Anschlag (72) geschoben. Dadurch kann der Kolbenteil (70) die Betätigungskraft (F) bzw. deren nicht ausgeglichenen Teil in den Kraftsensor (74) einleiten, so daß dieser, wie im vorigen Ausführungsbeispiel, auch bei Ausfall des druckgesteuerten Bremskreises (I) stets ein der vollen Betätigungskraft (F) entsprechendes elektrisches Signal abgeben kann.

In weiterer Fortbildung zeigt das Ausführungsbeispiel noch Mittel zum Schutz des Kraftsensors (74) gegen Überlastung. Dabei handelt es sich um ein im Kolbenteil (71) gefangenes Federelement (73) und zugehörige, nicht näher bezeichnete Abstütz- und Einbauteile. Sind Kräfte unterhalb der Überlastgrenze des Kraftsensors (74) zwischen dem Kraftsensor (74) und dem Kolbenteil (71) zu übertragen, so erfolgt diese Übertragung über das Federelement (73). Das Federelement (73) ist so ausgelegt, daß es, wenn die zu übertragende Kraft den Wert der Überlastgrenze annimmt, einfedert. Dadurch können die Kolbenteile (70 und 71) gegeneinander auf Anschlag gehen, so daß höhere Kräfte unter Umgehung des Kraftsensors (74) direkt zwischen den Kolbenteilen (70 und 71) übertragen werden. Die Überlastgrenze kann erreicht werden, wenn bei am Anschlag (72) liegendem Kolbenteil (71) die Betätigungskraft (F) einen der Auslegung zugrunde gelegten Wert überschreitet.

Es liegt auf der Hand, daß ein gefangenes Federelement mit dieser Zielsetzung auch an dem anderen Kolbenteil (70) angeordnet sein bzw. auf beide Kolbenteile (70 und 71) aufgeteilt sein kann.

Dadurch, daß in dem Ausführungsbeispiel nach Fig.1 jeder der Bremsen (9, 10) ein eigener Druckmodulator (7 bzw. 12) und ein eigener Drucksensor (8 bzw. 11) zugeordnet sind, kann der Bremsdruck jeder Bremse (9 bzw. 10), wenn die Steuerelektronik (4) für jeden Druckmodulator (7 bzw. 12) ein eigenes Signal abgibt, individuell geregelt werden. Unter Verzicht auf Bremskomfort können aber in nicht dargestellter Weise den Bremsen (9, 10) nur ein Druckmodulator und nur ein Drucksensor zugeordnet werden mit entsprechender Vereinfachung der Steuerelektronik, wodurch sich eine kostengünstige Lösung ergibt. Der Fachmann erkennt, daß für eine so vereinfachte Ausgestaltung die vorstehenden Ausführungen entsprechend mitgelten.

Es liegt auf der Hand, daß in nicht dargestellter Weise das Ausführungsbeispiel um einen oder mehrere zusätzliche elektrisch gesteuerte und/oder druckmittelgesteuerte Bremskreise erweitert werden kann. Dabei gelten für den oder die zusätzlichen elektrisch gesteuerten Bremskreise die vorstehenden Ausführungen zum Aufbau des elektrisch gesteuerten Bremskreises (II) sowie dessen Koppelung an den druckgesteuerten Bremskreis (I) oder einen anderen druckgesteuerten Bremskreis entsprechend.

Der Fachmann erkennt, daß die vorstehend zu den einzelnen Ausführungsbeispielen gegebenen Erläuterungen für die anderen Ausführungsbeispiele in entsprechender Weise mitgelten, sofern sich aus diesen Erläuterungen nichts Widersprechendes ergibt.

Schließlich erkennt der Fachmann, daß sich der Schutzbereich der vorliegenden Erfindung nicht in den Ausführungsbeispielen erschöpft, sondern alle Ausgestaltungen erfaßt, deren Merkmale sich den Patentansprüchen unterordnen. Insbesondere sollen alle Ausgestaltungen miterfaßt sein, in denen zwei oder mehrere der erfindungswesentlichen elektrischen Bauteile in einer oder mehreren Baugruppe(n) zusammengefaßt sind.

## Patentansprüche

1. Anordnung zur Steuerung wenigstens eines elektrisch gesteuerten Bremskreises (II) einer in einem Fahrzeug angeordneten Mehrkreis-Bremsanlage mit druckmittelbetätigten Bremsen (1, 2, 9, 10), welche die Merkmale aufweist:
a) die Mehrkreis-Bremsanlage weist einen Bremswertgeber (15) auf, der wenigstens einen von der zugeführten Betätigungskraft und/oder dem Betätigungsweg abhängigen Druck aussteuert;
b) die Mehrkreis-Bremsanlage weist wenigstens den einen elektrisch gesteuerten Bremskreis (II) und wenigstens einen durch den ausgesteuerten Druck betätigten Bremskreis (I) auf;
c) der elektrisch gesteuerte Bremskreis (II) weist eine Bremsdruck-Steuereinrichtung (4, 7, 12, 8, 11) auf,
gekennzeichnet durch die Merkmale:
d) der durch den ausgesteuerten Duck betätigte Bremskreis (I) weist einen den ausgesteuerten Druck erfassenden und in ein davon abhängiges elektrisches Signal umsetzenden Drucksensor (30; 63, 64; 70, 71, 74) auf, dessen Ausgang mit einem Steuereingang der Bremsdruck-Steuereinrichtung (4, 7, 12, 8, 11) des elektrisch gesteuerten Bremskreises (II) verbunden ist;
e) der Drucksensor (30; 63, 64; 70, 71, 74) ist im Gehäuse des Bremswertgebers (15) angeordnet.

2. Anordnung nach Anspruch 1, wobei der Bremswertgeber einen einerseits mit der Betätigungskraft (F) und andererseits mit dem ausgesteuerten Druck beaufschlagten Betätigungskolben (24) enthält, dadurch gekennzeichnet, daß zwischen dem Betätigungskolben (24) und dem Drucksensor (30) ein Stößel (32) angeordnet ist und daß der Drucksensor (30) zugleich als Kraftsensor ausgebildet sowie derart angeordnet ist, daß er den Hub des Stößels (32) in Richtung der Betätigungskraft (F) begrenzt.

3. Anordnung nach Anspruch 2, wobei der Drucksensor (30) einen Druckaufnehmer (52, 53) enthält, dadurch gekennzeichnet, daß in dem Drucksensor (30) der Druckaufnehmer (52, 53) wenigstens in Richtung auf den stößel (32) zu in eine Masse (51) aus quasihydraulischem Werkstoff eingebettet ist und zwischen der Masse (51) und dem ihr zugewandten Ende des Stößels (32) eine in Richtung der Wirkachse der Betätigungskraft (F) verschiebbare Kraftverteilerplatte (50) angeordnet ist.

4. Anordnung nach Anspruch 2, dadurch gekennzeichnet, daß der Drucksensor (30) aus einem Kraftsensor (41, 42) und einer zwischen diesem und dem ihm zugewandten Ende des Stößels (32) angeordneten, abgedichtet in Richtung der Wirkachse der Betätigungskraft (F) verschiebbaren Druckaufnahmeplatte (40) besteht.

5. Anordnung nach Anspruch 1, wobei der Bremswertgeber einen einerseits mit der Betätigungskraft (F) und andererseits mit dem ausgesteuerten Druck beaufschlagten Betätigungskolben (24) aufweist, dem die Betätigungskraft (F) über eine Regelfeder (22) zugeführt wird, dadurch gekennzeichnet, daß der Drucksensor (63, 64) als die Einfederung der Regelfeder (22) erfassender Wegsensor ausgebildet ist.

6. Anordnung nach Anspruch 5, dadurch gekennzeichnet, daß am Gehäuse ein den Hub des Betätigungskolbens (24) in Richtung der Betätigungskraft (F) begrenzender Anschlag (60) vorgesehen ist.

7. Anordnung nach Anspruch 1, wobei der Bremswertgeber einen einerseits mit der Betätigungskraft (F) und andererseits mit dem ausgesteuerten Druck beaufschlagten Betätigungskolben (70, 71) enthält,
gekennzeichnet durch die Merkmale:
a) Der Betätigungskolben (70, 71) ist in einen mit der Betätigungskraft (F) beaufschlagten Kolbenteil (70) und einen mit dem ausgesteuerten Druck beaufschlagten Kolbenteil (71) aufgeteilt, wobei die Kolbenteile (70 bzw. 71) gegeneinander verschieblich sind;
b) der Drucksensor (70, 71, 74) wird von den beiden Kolbenteilen (70, 71) und einem dazwischen angeordneten Kraftsensor (74) gebildet.

8. Anordnung nach Anspruch 7, dadurch gekennzeichnet, daß am Gehäuse ein den Hub des mit dem ausgesteuerten Druck beaufschlagten Kolbenteils (71) in Richtung der zugeführten Betätigungskraft (F) begrenzender Anschlag (72) vorgesehen ist.

9. Anordnung nach einem der Ansprüche 7 oder 8, dadurch gekennzeichnet, daß wenigstens in einem Kolbenteil (71) ein gefangenes Federelement (73) vorgesehen ist, über welches sich der Kraftsensor (74) an diesem Kolbenteil (71) abstützt.

## Claims

1. Arrangement for controlling at least one electrically controlled brake circuit (II) of a multi-circuit brake system arranged in a vehicle and having pressure-medium-actuated brakes (1, 2, 9, 10), which arrangement has the features:
a) the multi-circuit brake system has a braking value transmitter (15) that at least delivers a controlled pressure dependent upon the applied actuating force and/or the actuating displacement;
b) the multi-circuit brake system has at least the one electrically controlled brake circuit (II) and at least one brake circuit (I) actuated by the controlled pressure;
c) the electrically controlled brake circuit (II) has a brake pressure control device (4, 7, 12, 8, 11),
characterised by the features:
d) the brake circuit (I) that is actuated by the controlled pressure has a pressure sensor (30; 63, 64; 70, 71, 74) that detects the controlled pressure and converts it into an electrical signal dependent thereon, the output of which pressure sensor is connected to a control input of the brake pressure control device (4, 7, 12, 8, 11) of the electrically controlled brake circuit (II);
e) the pressure sensor (30; 63, 64; 70, 71, 74) is arranged in the housing of the braking value transmitter (15).

2. Arrangement according to claim 1, wherein the braking value transmitter contains an actuating piston (24) that is acted upon on one side by the actuating force (F) and on the other side by the controlled pressure, characterised in that a ram (32) is arranged between the actuating piston (24) and the pressure sensor (30), and the pressure sensor (30) is at the same time constructed as a force sensor and is so arranged that it limits the stroke of the ram (32) in the direction of the actuating force (F).

3. Arrangement according to claim 2, wherein the pressure sensor (30) contains a pressure absorber (52, 53), characterised in that, in the pressure sensor (30), the pressure absorber (52, 53) is embedded in a mass (51) of quasi-hydraulic material at least in the direction towards the ram (32), and there is arranged between the mass (51) and the end of the ram (32) towards it a force distributing plate (50) that is displaceable in the direction of the line of action of the actuating force (F).

4. Arrangement according to claim 2, characterised in that the pressure sensor (30) consists of a force sensor (41, 42) and a pressure absorbing plate (40) that is arranged between the latter and the end of the ram (32) towards the latter and that is displaceable in a sealed manner in the direction of the line of action of the actuating force (F).

5. Arrangement according to claim 1, wherein the braking value transmitter has an actuating piston (24) that is acted upon on one side by the actuating force (F) and on the other side by the controlled pressure, to which piston the actuating force (F) is applied via a regulating spring (22), characterised in that the pressure sensor (63, 64) is constructed as a displacement sensor that detects the deflection of the regulating spring (22).

6. Arrangement according to claim 5, characterised in that there is provided on the housing a stop (60) that limits the stroke of the actuating piston (24) in the direction of the actuating force (F).

7. Arrangement according to claim 1, wherein the braking value transmitter contains an actuating piston (71, 72) that is acted upon on one side by the actuating force (F) and on the other side by the controlled pressure,
characterised by the features:
a) the actuating piston (70, 71) is divided into a piston part (70) that is acted upon by the actuating force (F) and a piston part (71) that is acted upon by the controlled pressure, the piston parts (70 and 71) being displaceable relative to each other;
b) the pressure sensor (70, 71, 74) is formed by the two piston parts (70, 71) and a force sensor (74) that is arranged between them.

8. Arrangement according to claim 7, characterised in that there is provided on the housing a stop (72) that limits the stroke of the piston part (71) in the direction of the applied actuating force (F), which piston part (71) is acted upon by the controlled pressure.

9. Arrangement according to either claim 7 or claim 8, characterised in that there is provided in at least one piston part (71) a captive spring element (73) by means of which the force sensor (74) is supported on that piston part (71).

## Revendications

1. Dispositif pour commander au moins un circuit de freinage (II) à commande électrique appartenant à une installation de freinage à circuits multiples montée dans un véhicule, comprenant des freins (1, 2, 9, 10) actionnés par un fluide de pression, qui présente les particularités suivantes :
a) l'installation de freinage à circuits multiples comprend un émetteur de valeur de freinage (15) qui commande au moins une pression fonction de la force d'actionnement introduite et/ou de la course d'actionnement ;
b) l'installation de freinage à circuits multiples présente au moins le circuit de freinage (II) à commande électrique et au moins un circuit de freinage (I) actionné par la pression commandée ;
c) le circuit de freinage (II) à commande électrique présente un dispositif (4, 7, 12, 8, 11) de commande de la pression de freinage,
caractérisé en ce que :
d) le circuit de freinage (I) actionné par la pression commandée présente un capteur de pression (30 ; 63, 64 ; 70, 71, 74) qui capte la pression commandée et la transforme en un signal électrique qui dépend de cette pression, et dont la sortie est connectée à une entrée de commande du dispositif (4, 7, 12, 8, 11) de commande de la pression de freinage du circuit de freinage (II) à commande électrique ;
e) le capteur de pression (30 ; 63, 64 ; 70, 71, 74) est disposé dans le boîtier de l'émetteur (15) de valeur de freinage.

2. Dispositif selon la revendication 1, dans lequel l'émetteur de valeur de freinage comprend un piston d'actionnement (24) qui est chargé, d'une part, par la force d'actionnement (F) et, d'autre part, par la pression commandée, caractérisé en ce qu un poussoir (32) est interposé entre le piston d'actionnement (24) et le capteur de pression (30) et en ce que le capteur de pression (30) constitue en même temps un capteur de force et est agencé de manière à limiter la course du poussoir (32) dans la direction de la force d'actionnement (F).

3. Dispositif selon la revendication 2, dans lequel le capteur de pression (30) comprend un récepteur de pression (52, 53), caractérisé en ce que, dans le capteur de pression (30), le récepteur de pression (52, 53) est noyé, du moins en direction du poussoir (32), dans une masse (51) faite d'une matière quasi hydraulique, et en ce qu'une plaque (50) de distribution de la pression qui peut coulisser parallèlement à l'axe d'action de la force d'actionnement (F), est agencée entre la masse (51) et l'extrémité du poussoir (52) dirigée vers cette masse.

4. Dispositif selon la revendication 2, caractérisé en ce que le capteur de pression (30) est composé d'un capteur de force (41, 42) et d'une plaque (40) de réception de la pression qui est disposée entre ce capteur et l'extrémité du poussoir (32) dirigée vers ce capteur, et qui peut coulisser à joint étanche parallèlement à l'axe d'action de la force d'actionnement (F).

5. Dispositif selon la revendication 1, dans lequel l'émetteur de valeur de freinage présente un piston d'actionnement (24) qui est chargé, d'une part, par la force d'actionnement (F) et, d'autre part, par la pression commandée, et auquel la force d'actionnement (F) est transmise par l'intermédiaire d'un ressort de réglage (22), caractérisé en ce que le capteur de pression (63, 64) est constitué par un capteur de course qui capte la compression élastique du ressort de réglage (22).

6. Dispositif selon la revendication 5, caractérisé en ce que, sur le boîtier, est prévu une butée (60) qui limite la course du piston d'actionnement (24) dans la direction parallèle à la force d'actionnement (F).

7. Dispositif selon la revendication 1, dans lequel l'émetteur de valeur de freinage comprend un piston d'actionnement (70, 71) qui est chargé, d'une part par la force d'actionnement (F) et, d'autre part, par la pression commandée,
caractérisé en ce que :
a) le piston d'actionnement (70, 71) est divisé en une partie de piston (70) chargée par la force d'actionnement (F) et une partie de piston (71) chargée par la pression commandée, les parties (70 et 71) du piston pouvant se déplacer en translation l'une par rapport à l'autre ;
b) le capteur de pression (70, 71, 74) est constitué par les deux parties (70, 71) du piston et par un capteur de force (74) disposé entre ces parties.

8. Dispositif selon la revendication 7, caractérisé en ce qu'il est prévu, sur le boîtier, une butée (72) qui limite la course de la partie (71) du piston qui est chargée par la pression commandée, selon la direction de la force d'actionnement (F) introduite.

9. Dispositif selon une des revendications 7 et 8, caractérisé en ce qu'il est prévu, dans au moins une partie (71) du piston, un élément élastique (73) emprisonné par l'intermédiaire duquel le capteur de force (74) prend appui sur cette partie (71) du piston.
